# DEMANDE DE BREVET EUROPEEN

(11) **EP 0 789 183 A1**
(43) Date de publication de la demande: **13.08.1997**
(21) Numéro de dépôt: 97420020.6
(22) Date de dépôt: 07.02.1997
(51) Int. Cl.: F17D 5/06, F16K 17/32

(54) **Détecteur de fuites**

(30) Priorité: 08.02.1996 FR 9601770
(71) Demandeur: Petit, Christophe Henri, 38150 Salaise sur Sanne (FR)
(72) Inventeur: Petit, Christophe Henri, 38150 Salaise sur Sanne (FR)

(57) **Abrégé**

L'invention concerne un dispositif permettant la détection de fuites de fluide dans tout circuit se trouvant en aval de celui-ci.

Il est constitué d'un détendent (**1**), réglé à pression **P2**, ayant en parallèle un by-pass réglable (**5**) permettant, par une faible alimentation de fluide de monter la pression du circuit (**3**) au-dessus de la pression de fermeture **P2** du détendeur (**1**) et d'arriver ainsi au seuil de coupure **P3** d'un manocontact (**4**) arrêtant une temporisation (**8**), au-delà de laquelle différentes actions peuvent entrer en fonction :
- alarme visuelle ou sonore
- fermeture d'électrovanne.

Le dispositif, selon l'invention, est particulièrement destiné à la surveillance d'installations d'eau en appartement ou en maison individuelle.

## Description

La présente invention concerne un dispositif permettant de détecter les fuites d'un fluide (liquide ou gazeux) dans les minutes qui suivent cette anomalie.

Il doit être placé en amont de l'installation à surveiller. L'appareil est plus particulièrement destiné à la surveillance d'installation d'eau en appartement ou maison individuelle. Les systèmes de détection actuels signalent seulement un problème en un point repéré à l'avance, alors que ce dispositif permet la surveillance totale de toute installation ayant des arrêts momentanés d'utilisation.

Le détecteur de fuite, selon l'invention, est essentiellement caractérisé par un détendeur doublé d'un by-pass réglable et d'un manocontact.

Le fluide arrivant à la pression du réseau d'alimentation passe par le détendeur où il est ramené à la pression d'utilisation qui est inférieure à la pression de coupure d'un manocontact. L'arrêt de circulation du fluide en aval du dispositif ferme le détendeur. Un très léger débit arrivant par un by-pass permet de faire monter la pression jusqu'au seuil de coupure d'un manocontact. La plus petite fuite en aval du dispositif maintient la pression inférieure au seuil de coupure du manocontact et déclenche une temporisation qui engendrera, au bout d'un certain laps de temps, un signal sonore ou visuel et l'isolement du circuit par une électrovanne.

Selon différents modes de réalisation, un détendeur peut être ajouté en amont du dispositif, dans le cas ou la pression d'alimentation est trop forte.

Le dessin illustre l'invention.

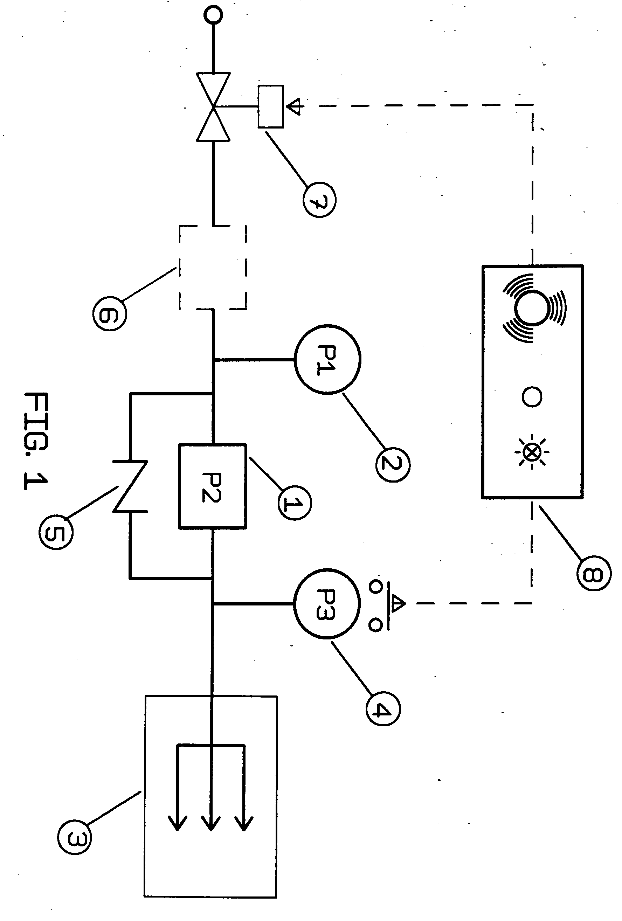

La figure 1 représente le schéma de principe du dispositif.

Selon l'invention, en référence à ce dessin, le dispositif comporte :

Un détendeur (**1**) réglé à pression **P2** comportant un by-pass (**5**) et un manocontact (**4**) réglé à pression **P3** (**P1** représentant la pression d'alimentation).

### Fonctionnement du dispositif :

Lorsqu'il y a demande de débit en (**3**), la pression après le détendeur (**1**) chute jusqu'à **P2** et le contact du manocontact (**4**) s'établit, mettant en service une temporisation (**8**) réglée sur 15 mn ou plus. A l'interruption de la demande de débit en (**3**), le détendeur (**1**) se ferme à **P2**. Une très faible alimentation arrivant par le by-pass (**5**) permet à la pression en (**4**) de revenir à la pression de coupure **P3** du manocontact et de monter jusqu'à **P1**, d'où l'intérêt d'un détendeur (**6**) en amont du dispositif, si **P1** est trop élevée.

L'absence de remontée à la pression **P3** en ( **4** ), après la temporisation, signifie qu'il y a une fuite supérieure au débit du by-pass ( **5** ). Si cette fuite persiste, celà déclenchera une alarme visuelle ou sonore et pourra agir sur une électrovanne ( **7** ) de coupure générale.

Le dispositif, selon l'invention, est destiné à tout réseau, liquide ou gazeux, ayant des interruptions de débit momentanées. n permet un arrêt total du fluide sur le circuit contrôlé si l'anomalie se prolonge au-delà de la temporisation.

## Revendications

1. Dispositif permettant la détection de fuites d'un fluide dans tout circuit se trouvant en aval de celui-ci et ayant des arrêts momentanés d'utilisation, ce dispositif est composé d'un détendeur (**1**) réglé à pression **P2** ayant en parallèle un by-pass réglable (**5**) permettant par une faible alimentation du fluide, de monter la pression du circuit (**3**) au-dessus de la pression de fermeture **P2** du détendeur (**1**) et d'arriver, ainsi, au seuil de coupure **P3** d'un manocontact (**4**) arrêtant une temporisation (**8**), au-delà de laquelle différentes actions peuvent entrer en fonction :
- alarme visuelle ou sonore
- fermeture d'électrovanne.

2. Dispositif, selon la revendication 1, caractérisé en ce qu'un détendeur (**1**) ferme l'alimentation d'un circuit (**3**) à une pression (**P2**) lors de l'arrêt de circulation du fluide et qu'un by-pass (**5**), monté en parallèle du détendeur (**1**), permet, par une faible alimentation du fluide, de monter la pression du circuit ( **3** ) à une pression supérieure à la pression de fermeture du détendeur (**1**).

3. Dispositif, selon l'une quelconque des revendications précédentes, caractérisé en ce que la pression du circuit ( **3** ) devenant supérieure à la pression P2 de fermeture du détendeur (**1**) arrivera au seuil de coupure **P3** du manocontact ( **4** ) qui arrêtera la temporisation ( **8** ) couplée aux alarmes et à l'électrovanne ( **7** ). En cas de fuite, la pression **P3** de coupure du manocontact ( **4** ) ne sera pas atteinte et les alarmes se déclencheront puis l'électrovanne fermera l'alimentation du circuit.
